(19) Europäisches Patentamt
European Patent Office
Office européen des brevets

(11) Veröffentlichungsnummer: **0 145 655**
**B1**

(12) # EUROPÄISCHE PATENTSCHRIFT

(45) Veröffentlichungstag der Patentschrift: **30.08.89**

(51) Int. Cl.4: **C 09 B 62/04**

(21) Anmeldenummer: **84810536.7**

(22) Anmeldetag: **05.11.84**

(54) **Verfahren zur Herstellung von Reaktivfarbstoffen.**

(30) Priorität: **10.11.83 CH 6069/83**

(43) Veröffentlichungstag der Anmeldung: **19.06.85 Patentblatt 85/25**

(45) Bekanntmachung des Hinweises auf die Patenterteilung: **30.08.89 Patentblatt 89/35**

(84) Benannte Vertragsstaaten: **CH DE FR GB LI**

(56) Entgegenhaltungen:
**EP-A- 0 038 453**
**FR-A- 2 533 224**
**Die Akte enthält technische Angaben, die nach dem Eingang der Anmeldung eingereicht wurden und die nicht in dieser Patentschrift enthalten sind.**

(73) Patentinhaber: **CIBA-GEIGY AG**
**Klybeckstrasse 141**
**CH-4002 Basel (CH)**

(72) Erfinder: **Franke, Karlheinz, Dr.**
**Emanuel Büchel Strasse 2**
**CH-4052 Basel (CH)**

**EP 0 145 655 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die vorliegende Erfindung betrifft ein Verfahren zur Herstellung von Reaktivfarbstoffen durch Umsetzung von anionischen, eine Aminogruppe enthaltenden Farbstoffen mit Cyanurchlorid und gegebenenfalls anschliessende weitere Umsetzung mit Ammoniak oder einem organischen Amin.

Umsetzungen von Aminogruppen enthaltenden Verbindungen mit Cyanurchlorid werden üblicherweise zwischen 0 und 5 °C durchgeführt, wobei die Kühlung meist durch direkte Zugabe von Eis zu der Reaktionsmischung erfolgt. Höhere Temperaturen werden sorgfältig vermieden, um unerwünschte Nebenreaktionen, wie z. B. Hydrolyse des Cyanurchlorids oder Weiterreaktion des Monokondensationsproduktes, zu vermeiden.

Aus der EP-A-38 453, Beispiel 1, ist die Kondensation eines Aminophthalocyanin-Farbstoffs mit Cyanurchlorid bei Raumtemperatur bekannt.

Es wurde nun gefunden, dass man auch anionische, eine Aminogruppe enthaltende Farbstoffe überraschenderweise bei einer Temperatur von 20 bis 80 °C mit Cyanurchlorid umsetzen kann, ohne dass die erwähnten Nebenreaktionen in störender Weise auftreten. Da auf Kühlung der Reaktionsmischung verzichtet werden kann, entfällt die unerwünschte Verdünnung durch Eiswasser. Durch die Anwendung höherer Temperaturen wird ausserdem in vielen Fällen die Konzentration an gelösten Edukten und/oder Produkten erhöht und die Viskosität des Reaktionsgemisches erniedrigt, was sich zusätzlich reaktionsbeschleunigend auswirkt. Zudem gestatten die höheren Temperaturen eine erhebliche Verkürzung der Reaktionszeit und die hohen Konzentrationen begünstigen die Reaktion des Cyanurchlorids mit dem aminogruppenhaltigen Farbstoff gegenüber der Hydrolyse des Cyanurchlorids.

Gegenstand der Erfindung ist ein Verfahren zur Herstellung von Reaktivfarbstoffen durch Umsetzung von Cyanurchlorid mit anionischen, eine Aminogruppe enthaltenden Farbstoffen, das dadurch gekennzeichnet ist, dass man Cyanurchlorid mit dem Farbstoff bei einer Temperatur von 20 bis 80 °C und einem pH-Wert zwischen 3,0 und 7,0 unter rascher Zugabe der Edukte während 1 bis 30 Minuten adiabatisch umsetzt.

Es ist zweckmässig, bei einem pH-Wert zu arbeiten, der nicht unterhalb des pK-Wertes des aminogruppenhaltigen Farbstoffes liegt.

Unter adiabatischer Umsetzung wird hier eine Umsetzung verstanden, bei der die Reaktionsmischung weder gekühlt noch geheizt wird und auch keine Reaktionsgefässe verwendet werden, die besonders gegen Wärmeübertragung isoliert sind.

Als Farbstoffe kommen für das erfindungsgemässe Verfahren anionische Farbstoffe in Betracht, welche mindestens eine sekundäre oder vorzugsweise eine primäre Aminogruppe enthalten. Besonders geeignet sind Farbstoffe mit einer Aminogruppe, welche so weit desaktiviert ist, dass sie unter den Verfahrensbedingungen mit Cyanurchlorid reagiert, nicht jedoch mit dem Kondensationsprodukt aus Cyanurchlorid und Aminogruppe enthaltendem Farbstoff.

Die Farbstoffe können beliebigen Klassen angehören. Es handelt sich beispielsweise um anionische, metallisierte oder metallfreie Farbstoffe der Azomethin-, Dioxazin-, Phenazin-, Stilben-, Triphenylmethan-, Xanthen-, Thioxanthon-, Nitroaryl-, Naphthochinon- oder Pyrenchinon-Reihe, vorzugsweise um Anthrachinon-, Phthalocyanin- oder Formazan- und insbesondere um Azofarbstoffe. Unter Farbstoffen sollen auch optische Aufheller bzw. deren Vorstufen verstanden werden. Es kommen z. B. Aufheller der folgenden Verbindungsklassen in Frage: Stilbene, Cumarine, Benzocumarine, Pyrene, Pyrazine, Pyrazoline, Oxazine, Mono- oder Dibenzoxazolyl- oder -imidazolylverbindungen, Aryltriazol- und v-Triazol-Derivate sowie Naphthalsäureimide.

Diese Farbstoffe enthalten mindestens eine anionische Gruppe, wie z. B. eine Carbonsäuregruppe oder insbesondere eine Sulfogruppe.

Besonders geeignet sind Monoazofarbstoffe mit mindestens einer Sulfogruppe.

Das erfindungsgemässe Verfahren wird vorzugsweise bei einer Temperatur zwischen 40 und 60 °C durchgeführt und der bevorzugte pH-Bereich liegt zwischen 3,5 und 4,5.

Cyanurchlorid und anionischer, eine Aminogruppe enthaltender Farbstoff werden vorzugsweise im Molverhältnis 1 : 0,9 bis 1 : 1, insbesondere im Molverhältnis 1 : 0,95 bis 1 : 1 eingesetzt.

Das erfindungsgemässe Verfahren wird beispielsweise folgendermassen durchgeführt:

0,1 Mol anionischer, eine Aminogruppe enthaltender Farbstoff werden in 200 bis 300 ml Wasser unter Zusatz von NaOH zur Erzielung eines pH-Wertes zwischen 4 und 7 gelöst und auf ca. 40 °C aufgeheizt. Unter kräftigem Rühren setzt man dieser Farbstofflösung oder -suspension 0,1 bis 0,105 Mol Cyanurchlorid möglichst schnell als Pulver, wässrige Suspension oder Schmelze zu und gibt gleichzeitig NaOH zu, so dass ein pH-Wert von etwa 3,5 eingehalten wird. Nach 5 bis 15 Minuten ist die Reaktion normalerweise beendet, wobei die Temperatur auf 50 bis 60 °C angestiegen ist.

Falls gewünscht kann das erhaltene Kondensationsprodukt anschliessend ohne Isolierung mit Ammoniak oder einem organischen Amin umgesetzt werden. Diese bevorzugte Ausführungsform des erfindungsgemässen Verfahrens wird z. B. folgendermassen durchgeführt:

Die gemäss der vorstehenden Beschreibung erhaltene Lösung oder Suspension des Kondensationsproduktes aus aminogruppenhaltigem Farbstoff und Cyanurchlorid wird durch Zugabe von NaOH auf einen pH-Wert von 7,0 eingestellt.

Anschliessend setzt man 1 Mol Amin pro Mol Kondensationsprodukt unter kräftigem Rühren als Pulver, Suspension oder Lösung zu, wobei durch gleichzeitige Zugabe von NaOH ein pH-Wert von 6 bis 8, vorzugsweise 6,5 bis 7,5, eingehalten wird. Nach Beendigung der Reaktion (ca. 10 bis 15 Minuten) beträgt die Temperatur höchstens 70 °C. Der erhaltene Farbstoff wird auf übliche Weise, z. B. durch Aussalzen, Eindampfen oder vorzugsweise durch Sprühtrocknen isoliert.

Falls anstelle eines organischen Amins Ammoniak verwendet wird, so empfiehlt es sich, einen pH-Wert zwischen 7,5 und 10,5 einzuhalten. Ausserdem ist der Zusatz von 0,5 bis 1 Mol/l Ammonchlorid vor der Zugabe von Ammoniak günstig zur Stabilisierung des pH-Werts.

Geeignete Amine sind z. B. die bei Monochlortriazinylfarbstoffen üblichen Amine, vorzugsweise gegebenenfalls substituierte Aniline.

Ammoniak oder die Amine werden z. B. als Feststoffe, als wässrige Lösung oder Suspension eingesetzt.

Das erfindungsgemässe Verfahren findet bevorzugt Verwendung zur Herstellung von reaktiven Azofarbstoffen und eine besonders bevorzugte Ausführungsform besteht darin, dass man den Azofarbstoff aus Diazo- und Kupplungskomponente herstellt, und das erhaltene Reaktionsgemisch ohne Isolierung des Azofarbstoffes mit Cyanurchlorid bei einer Temperatur zwischen 20 und 80 °C und einem pH-Wert zwischen 3,0 und 7,0 während 1 bis 30 Minuten unter schneller Dosierung und kräftiger Durchmischung der Edukte umsetzt, und dass man das so erhaltene Kondensationsprodukt aus anionischem, eine Aminogruppe aufweisendem Azofarbstoff und Cyanurchlorid ohne Isolierung anschliessend mit Ammoniak oder einem organischen Amin umsetzt, wobei alle Reaktionsschritte adiabatisch durchgeführt werden.

Nach dem erfindungsgemässen Verfahren erhält man die Reaktivfarbstoffe bei geringerem Zeit- und Energiebedarf in gleich guter oder besserer Ausbeute und Reinheit wie nach den bisher üblichen Verfahren. Infolge der erhöhten Temperatur und des Arbeitens in höheren Konzentrationen lässt sich das erfindungsgemässe Verfahren in erheblich kleineren Reaktionsgefässen durchführen, wobei man bei periodischer Wiederholung der einzelnen Reaktionsschritte (Diazotierung, Kupplung, Umsetzung mit Cyanurchlorid, Umsetzung mit Amin) in z. B. 15 minütigem Batchverfahren je Einzelstufe in einer automatisierten Anlage zu einem quasi-kontinuierlichen Verfahren kommt. Ausserdem sind mit den relativ kleinen Reaktionsvolumina extrem kurze Dosier- und Mischzeiten realisierbar, was die Durchführung der Reaktionen unter den Bedingungen eines nahezu idealen Batch-Reaktors erlaubt. Die Steuerung einer solchen Anlage ist relativ einfach und kann problemlos mit einem Mikroprozessor durchgeführt werden.

Anstelle der quasi-kontinuierlichen Arbeitsweise in einer Serie von automatisierten « Mini-Batch-Reaktoren » können sowohl einzelne der vorstehend genannten Reaktionsschritte als auch zwei oder mehrere in Kombination vollkontinuierlich in einem Strömungsreaktor mit wenig Rückvermischung, aber guter radialer Durchmischung durchgeführt werden.

Die folgenden Beispiele dienen der Erläuterung der Erfindung, ohne sie darauf zu beschränken. Prozente bedeuten Gewichtsprozente und die Temperaturen sind in Grad Celsius angegeben.

## Beispiel 1

In 150 ml Wasser von 20° gibt man unter Rühren 184 g 2-Naphthylamin-3,6,8-trisulfosäure, setzt dann 48 ml 30 %ige Natronlauge zu, füllt mit Wasser auf ein Volumen von 380 ml auf und gibt 123 ml 4N Natriumnitritlösung zu.

Die erhaltene Lösung lässt man im Verlauf von 5 Minuten in eine Lösung, bestehend aus 200 ml Wasser, 1 g eines Dispergiermittels und 140 ml 33 %iger Salzsäure, unter kräftigem Rühren zulaufen. Man rührt noch weitere 5 bis 10 Minuten und setzt dann 5 ml 0,5N Sulfaminsäurelösung zu. Die erhaltene Suspension der Diazoverbindung, welche eine Temperatur von 40 bis 45° aufweist, lässt man innerhalb von 5 Minuten zu einer Lösung von 72,5 g 3-Aminophenylharnstoff in ca. 200 ml Wasser, die durch Zugabe von 30 %iger Natronlauge auf einen pH-Wert von 4,5 gestellt wurde, laufen, wobei man unter starkem Rühren 30 %ige Natronlauge so zudosiert, dass ein pH-Wert zwischen 4,3 und 4,7 eingehalten wird. Man rührt noch 5 bis 10 Minuten bei diesem pH-Wert nach und stellt dann durch Zugabe von 30 %iger Natronlauge einen pH-Wert von 7,0 ein.

Zu der Lösung des Azofarbstoffes, welche eine Temperatur von 50° und einen pH-Wert von 7,0 aufweist, gibt man 88,5 g festes, gemahlenes Cyanurchlorid auf einmal zu. Man lässt den pH-Wert unter starkem Rühren bis auf 3,0 absinken, gibt dann 30 %ige Natronlauge zu, bis der pH-Wert auf 3,5 gestiegen ist, und hält diesen pH-Wert 10 Minuten bei.

Zu der erhaltenen Lösung gibt man 25 g p-Phenylendiamin und 5 g Dinatriumphosphat zu, stellt mit 30 %iger Natronlauge einen pH-Wert von 7,0 ein und rührt 15 Minuten bei diesem Wert. Aus der Lösung werden durch Sprühtrocknung 184 g des Farbstoffes der Formel

(Siehe Formel Seite 4 f.)

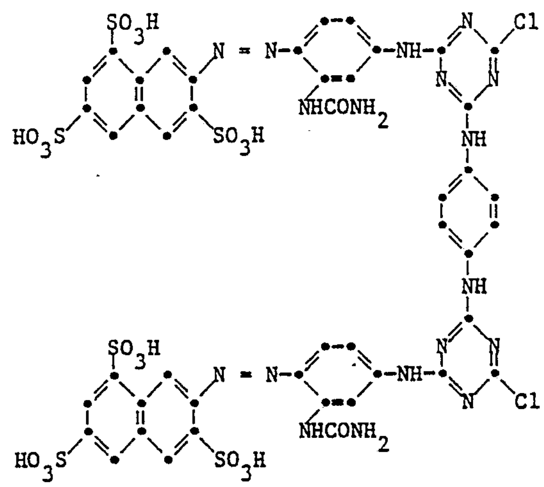

isoliert. Die Ausbeute liegt 8 bis 10 % höher, als bei der Synthese des Farbstoffes auf übliche Weise.

Bei adiabatischer Reaktionsführung der Einzelstufen und ohne Isolierung der Zwischenstufen beträgt die gesamte Reaktionszeit für die 4 Stufen, Diazotierung, Kupplung, Kondensation des Azofarbstoffs mit Cyanurchlorid und Umsetzung des Kondensationsproduktes mit Amin, insgesamt ca. 60 Minuten.

Nach ca. 15 Minuten ist der erste Reaktionsschritt (Diazotierung) beendet und der Reaktor kann unmittelbar erneut für eine Diazotierung verwendet werden, so dass bei automatisierter Prozessführung 4 Reaktionszyklen pro Stunde durchgeführt werden können. Somit ergibt sich für die Gesamtreaktion, umfassend alle 4 Stufen, eine effektive Zykluszeit von 15 Minuten.

Beispiel 2

Arbeitet man wie im Beispiel 1 beschrieben, setzt jedoch das Cyanurchlorid nicht als gemahlenes Pulver, sondern als wässrige Suspension, als Lösung in einem organischen Lösungsmittel, z. B. Aceton, oder als Schmelze ein, so erhält man den gleichen Farbstoff in praktisch gleicher Qualität und mit gleicher Ausbeute.

Beispiel 3

Nach der im Beispiel 1 beschriebenen Arbeitsweise stellt man den Farbstoff der Formel

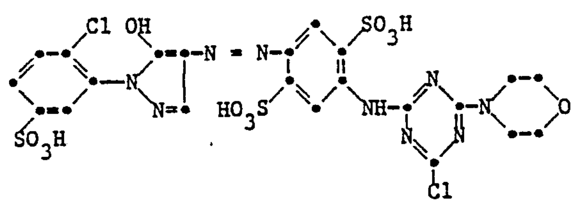

her, indem man äquivalente Mengen Diazo-, Kupplungskomponente, Cyanurchlorid und Amin einsetzt und ansonsten wie im Beispiel 1 arbeitet.

Beispiel 4

Nach der im Beispiel 1 beschriebenen Arbeitsweise stellt man den Farbstoff der Formel

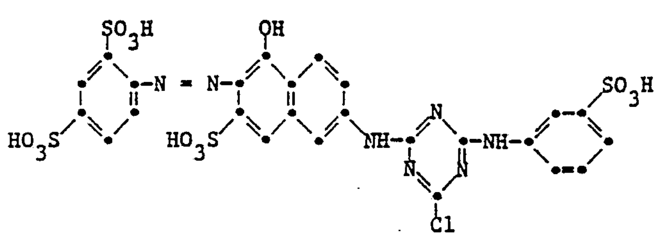

her, indem man äquivalente Mengen Diazokomponente, Kupplungskomponente, Cyanurchlorid und Amin einsetzt und ansonsten wie im Beispiel 1 arbeitet.

Beispiel 5

Nach der im Beispiel 1 beschriebenen Arbeitsweise stellt man den Farbstoff der Formel

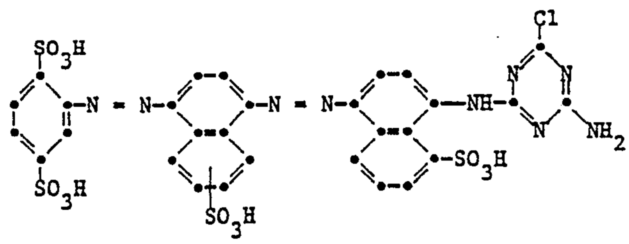

her, indem man äquivalente Mengen Diazokomponente, Kupplungskomponente und Cyanurchlorid einsetzt, anstelle von Amin jedoch Ammoniak bei einem pH-Wert von 8,5 einsetzt und ansonsten wie im Beispiel 1 arbeitet.

Beispiel 6

Nach der im Beispiel 1 beschriebenen Arbeitsweise stellt man den Farbstoff der Formel

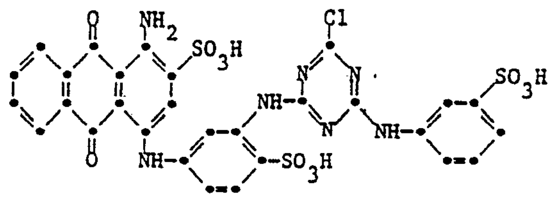

her, indem man äquivalente Mengen Diazokomponente, Kupplungskomponente, Cyanurchlorid und Amin einsetzt und ansonsten wie im Beispiel 1 arbeitet.

Beispiel 7

Nach der im Beispiel 1 beschriebenen Arbeitsweise stellt man den Farbstoff der Formel

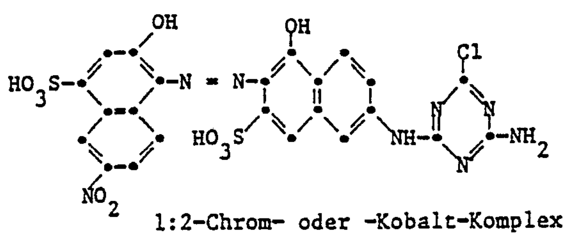

1:2-Chrom- oder -Kobalt-Komplex

her, indem man äquivalente Mengen Diazokomponente, Kupplungskomponente und Cyanurchlorid einsetzt, anstelle von Amin jedoch Ammoniak bei einem pH-Wert von 8,5 einsetzt und ansonsten wie im Beispiel 1 arbeitet.

Beispiel 8

Arbeitet man wie im Beispiel 1 beschrieben, setzt jedoch anstelle des dort zunächst hergestellten Azofarbstoffes den in der folgenden Formel enthaltenen, eine Aminogruppe aufweisenden Farbstoff mit äquivalenten Mengen Cyanurchlorid und Ammoniak bei pH 8,5 um, so erhält man den Farbstoff der Formel

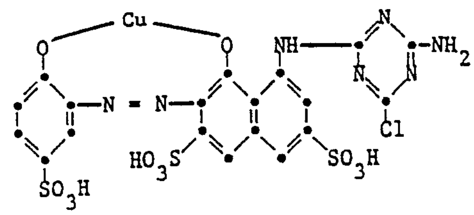

Beispiel 9

Arbeitet man wie im Beispiel 1 beschrieben, setzt jedoch anstelle des dort zunächst hergestellten Azofarbstoffes den in der folgenden Formel enthaltenen, eine Aminogruppe aufweisenden Farbstoff mit äquivalenten Mengen Cyanurchlorid und Ammoniak bei pH 8,5 um, so erhält man den Farbstoff der Formel

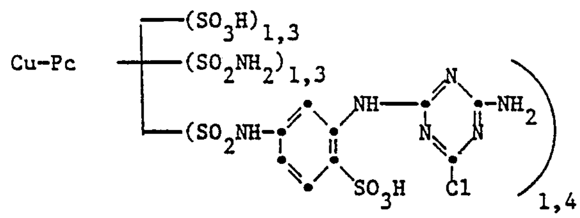

Cu-Pc = Kupferphthalocyanin.

Beispiel 10

Arbeitet man wie im Beispiel 1 beschrieben, setzt jedoch anstelle des dort zunächst hergestellten Azofarbstoffes den in der folgenden Formel enthaltenen, eine Aminogruppe aufweisenden Farbstoff mit äquivalenten Mengen Cyanurchlorid und Ammoniak bei pH 8,5 um, so erhält man den Farbstoff der Formel

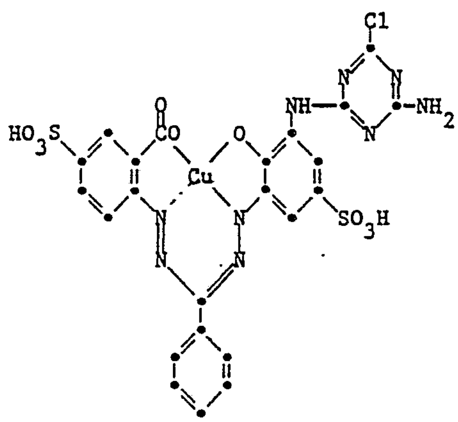

Beispiel 11

Arbeitet man wie im Beispiel 1 beschrieben, setzt jedoch anstelle des dort zunächst hergestellten Azofarbstoffes 4,4′-Diaminostilben-2,2′-disulfosäure mit äquivalenten Mengen Cyanurchlorid und Morpholin um, so erhält man die folgende Verbindung

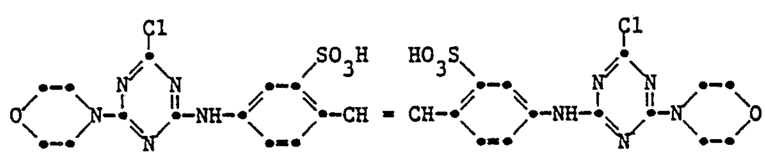

welche eine Vorstufe für einen wertvollen optischen Aufheller darstellt.

Beispiel 12

Ein Aequivalent Farbstofflösung mit einer Temperatur von 50°, enthaltend 0,35 Mol/l aminogruppenhaltigen Azofarbstoff aus Beispiel 1, 0,35 Mol/l Natriumacetat-Puffer und 0,15 Mol/l Natronlauge, sowie 1,05 Aequivalent Cyanurchlorid als Schmelze mit einer Temperatur von 150°, werden kontinuierlich über eine vorgeschaltete Dispergiereinheit (z. B. Rotor/Stator-Dispersionsmaschine) in einen Rohr-Reaktor eingespeist und dort unter adiabatischen Bedingungen kondensiert.

In der Dispergiereinheit wird während einer Verweilzeit von 1 bis 15 Sekunden bei hoher Turbulenz eine gleichmässige, schnelle Suspendierung der dispersen Phase erreicht, gleichzeitig findet hier ca. 20 bis 50 % Umsetzung statt. Nach einer anschliessenden weiteren Verweilzeit von 10 bis 15 Minuten in

einem Rohr-Reaktor mit gutem Pfropfströmungsprofil und guter radialer Durchmischung ist die Umsetzung zu mindestens 98 % beendet. Das Kondensationsprodukt verlässt mit einer Temperatur von ca. 60° und pH~3,5 den Rohr-Reaktor und wird im Auffangbehälter mit einem weiteren 1/2 Aequivalent NaOH auf pH 7,0 gestellt.

Das erhaltene Kondensationsprodukt wird anschliessend kontinuierlich oder diskontinuierlich wie im Beispiel 1 beschrieben mit 1 Aequivalent p-Phenylendiamin umgesetzt. Man erhält den im Beispiel 1 beschriebenen Farbstoff in etwa gleicher Ausbeute wie im Beispiel 1 bei ebenfalls sehr guter Reinheit.

**Patentansprüche**

1. Verfahren zur Herstellung von Reaktivfarbstoffen durch Umsetzung von Cyanurchlorid mit anionischen, eine Aminogruppe enthaltenden Farbstoffen, dadurch gekennzeichnet, dass man Cyanurchlorid mit dem Farbstoff bei einer Temperatur von 20 bis 80 °C und einem pH-Wert zwischen 3,0 und 7,0 unter rascher Zugabe der Edukte während 1 bis 30 Minuten adiabatisch umsetzt.

2. Verfahren gemäss Anspruch 1, dadurch gekennzeichnet, dass man die Umsetzung bei einer Temperatur zwischen 40 und 60 °C durchführt.

3. Verfahren gemäss einem der Ansprüche 1 oder 2, dadurch gekennzeichnet, dass man die Umsetzung bei einem pH-Wert zwischen 3,5 und 4,5 durchführt.

4. Verfahren gemäss Anspruch 1, dadurch gekennzeichnet, dass man bei einem pH-Wert arbeitet, der nicht unterhalb des pK-Wertes des aminogruppenhaltigen Farbstoffes liegt.

5. Verfahren gemäss einem der Ansprüche 1 bis 4, dadurch gekennzeichnet, dass man den anionischen, eine Aminogruppe enthaltenden Farbstoff und Cyanurchlorid im Molverhältnis von 0,9 : 1 bis 1 : 1, vorzugsweise im Molverhältnis 0,95 : 1 bis 1 : 1, einsetzt.

6. Verfahren gemäss einem der Ansprüche 1 bis 5, dadurch gekennzeichnet, dass man das Kondensationsprodukt aus anionischem, eine Aminogruppe enthaltendem Farbstoff und Cyanurchlorid ohne Isolierung anschliessend mit Ammoniak oder einem organischen Amin umsetzt.

7. Verfahren gemäss Anspruch 6, dadurch gekennzeichnet, dass man die Umsetzung mit Ammoniak bei einem pH-Wert zwischen 7,5 und 10,5 oder die Umsetzung mit einem Amin bei einem pH-Wert zwischen 6 und 8, vorzugsweise zwischen 6,5 und 7,5, durchführt.

8. Verfahren gemäss einem der Ansprüche 1 bis 7, dadurch gekennzeichnet, dass man als anionischen, eine Aminogruppe enthaltenden Farbstoff einen Anthrachinon-, Phthalocyanin- oder Formazanfarbstoff, insbesondere einen Azofarbstoff einsetzt.

9. Verfahren gemäss Anspruch 8, dadurch gekennzeichnet, dass man den Azofarbstoff aus Diazo- und Kupplungskomponente herstellt und das erhaltene Reaktionsgemisch ohne Isolierung des Azofarbstoffes mit Cyanurchlorid bei einer Temperatur zwischen 20 und 80 °C und einem pH-Wert zwischen 3,0 und 7,0 während 1 bis 30 Minuten adiabatisch umsetzt.

10. Verfahren gemäss Anspruch 9, dadurch gekennzeichnet, dass man das erhaltene Kondensationsprodukt aus anionischem, eine Aminogruppe aufweisendem Azofarbstoff und Cyanurchlorid ohne Isolierung anschliessend mit Ammoniak oder einem organischen Amin umsetzt.

11. Verfahren gemäss Ansprüchen 1 bis 10, dadurch gekennzeichnet, dass man einen anionischen, eine Aminogruppe enthaltenden Azofarbstoff durch Diazotierung und Kupplung herstellt und das erhaltene Reaktionsgemisch ohne Isolierung des Azofarbstoffes bei einer Temperatur zwischen 20 und 80 °C und einem pH-Wert zwischen 3,0 und 7,0 während 1 bis 30 Minuten unter schneller Dosierung und kräftiger Durchmischung der Edukte mit Cyanurchlorid umsetzt und anschliessend das erhaltene Kondensationsprodukt ohne Isolierung mit Ammoniak oder einem organischen Amin umsetzt, wobei alle Reaktionsschritte adiabatisch durchgeführt werden.

12. Verfahren gemäss Anspruch 11, dadurch gekennzeichnet, dass man die 4 Reaktionsschritte, Diazotierung, Kupplung, Kondensation des erhaltenen Azofarbstoffs mit Cyanurchlorid, Umsetzung des Kondensationsproduktes mit Ammoniak oder Amin, in ca. 15 minütigem Batch-Verfahren je Einzelstufe, in einer automatisierten Anlage zu einem quasi-kontinuierlichen Prozess vereinigt.

13. Verfahren gemäss Anspruch 11, dadurch gekennzeichnet, dass man einen oder zwei der Reaktionsschritte, Kondensation des aminogruppenhaltigen Azofarbstoffs mit Cyanurchlorid, Umsetzung des Kondensations-produktes mit Ammoniak oder Amin, vollkontinuierlich in einem Strömungsreaktor durchführt.

**Claims**

1. A process for the production of reactive dyes by the reaction of cyanuric chloride with anionic dyes containing an amino group, which process comprises the adiabatic reaction of cyanuric chloride with the dye, at a temperature of 20 to 80 °C and a pH value of between 3.0 and 7.0, with the rapid addition of the educts, within 1 to 30 minutes.

2. A process according to claim 1, wherein the reaction is performed at a temperature of between 40 and 60 °C.

3. A process according to either claim 1 or 2, wherein the reaction is performed at a pH value of between 3.5 and 4.5.

4. A process according to claim 1, wherein the reaction is performed at a pH value which is not below the pK value of the dye containing an amino group.

5. A process according to any one of claims 1 to 4, wherein the anionic dye, which contains an amino group, and cyanuric chloride are used in the molar ratio of 0.9 : 1 to 1 : 1, preferably in the molar ratio of 0.95 : 1 to 1 : 1.

6. A process according to any one of claims 1 to 5, wherein the condensation product of the anionic dye, which contains an amino group, and cyanuric chloride is subsequently reacted, without isolation, with ammonia or with an organic amine.

7. A process according to claim 6, wherein the reaction with ammonia is performed at a pH value of between 7.5 and 10.5, or the reaction with an amine is performed at a pH value of between 6 and 8, preferably between 6.5 and 7.5.

8. A process according to any one of claims 1 to 7, wherein the employed anionic dye containing an amino group is an anthraquinone, phthalocyanine or formazan dye, particularly an azo dye.

9. A process according to claim 8, which process comprises producing the azo dye from diazo component and coupling component, and adibatically reacting the reaction mixture obtained, without isolation of the azo dye, with cyanuric chloride at a temperature of between 20 and 80 °C and at a pH value of between 3.0 and 7.0 for 1 to 30 minutes.

10. A process according to claim 9, wherein the resulting condensation product of the anionic dye, which contains an amino group, and cyanuric chloride is subsequently reacted, without isolation, with ammonia or with an organic amine.

11. A process according to any one of claims 1 to 10, which process comprises producing an anionic azo dye containing an amino group by diazotisation and coupling, reacting the resulting reaction mixture, without isolation of the azo dye, with cyanuric chloride, at a temperature of between 20 and 80 °C and at a pH value of between 3.0 and 7.0, for 1 to 30 minutes with the rapid controlled addition and thorough mixing of the educts, and then reacting the condensation product obtained, without isolation, with ammonia or with an organic amine, all the reaction steps being performed adiabatically.

12. A process according to claim 11, wherein the 4 reaction steps, diazotisation, coupling, condensation of the resulting azo dye with cyanuric chloride and reaction of the condensation product with ammonia or an amine, are combined, in an approximately 15 minutes' batch process for each individual step, in an automated plant, to provide a quasi-continuous process.

13. A process according to claim 11, wherein one or two of the reaction steps, condensation of the azo dye, which contains an amino group, with cyanuric chloride, and reaction of the condensation product with ammonia or with an amine, are carried out fully continuously in a flow reactor.

**Revendications**

1. Procédé pour la préparation de colorants réactifs, par réaction du chlorure de cyanuryle avec des colorants anioniques contenant un groupe amino, caractérisé en ce que l'on fait réagir, pendant 1 à 30 minutes et dans des conditions adiabatiques, le chlorure de cyanuryle avec le colorant à une température de 20 à 80 °C et à un pH compris entre 3,0 et 7,0, avec addition rapide des produits de départ.

2. Procédé selon la revendication 1, caractérisé en ce que l'on effectue la réaction à une température comprise entre 40 et 60 °C.

3. Procédé selon l'une quelconque des revendications 1 ou 2, caractérisé en ce que l'on effectue la réaction à un pH compris entre 3,5 et 4,5.

4. Procédé selon la revendication 1, caractérisé en ce que l'on opère à un pH qui n'est pas inférieur au pK du colorant contenant un groupe amino.

5. Procédé selon l'une quelconque des revendications 1 à 4, caractérisé en ce que l'on met en œuvre le colorant anionique, contenant un groupe amino, et le chlorure de cyanuryle dans un rapport molaire de 0,9 : 1 à 1 : 1, de préférence dans un rapport molaire de 0,95 : 1 à 1 : 1.

6. Procédé selon l'une quelconque des revendications 1 à 5, caractérisé en ce que l'on fait réagir ensuite, sans l'isoler, le produit de condensation du colorant anionique, contenant un groupe amino, et du chlorure de cyanuryle, avec l'ammoniac ou avec une amine organique.

7. Procédé selon la revendication 6, caractérisé en ce que l'on effectue la réaction avec l'ammoniac à un pH compris entre 7,5 et 10,5, ou la réaction avec une amine à un pH compris entre 6 et 8, de préférence entre 6,5 et 7,5.

8. Procédé selon l'une quelconque des revendications 1 à 7, caractérisé en ce que, comme colorant anionique contenant un groupe amino, on utilise un colorant anthraquinone, phtalocyanine ou formazan, en particulier un colorant azoïque.

9. Procédé selon la revendication 8, caractérisé en ce que l'on prépare le colorant azoïque à partir d'un composant diazo et d'un copulant, et que l'on fait réagir le mélange réactionnel obtenu, dans des conditions adiabatiques et sans isoler le colorant azoïque, avec le chlorure de cyanuryle, à une température comprise entre 20 et 80 °C et à un pH compris entre 3,0 et 7,0, pendant 1 à 30 minutes.

10. Procédé selon la revendication 9, caractérisé en ce que l'on fait réagir ensuite le produit de condensation obtenu à partir du colorant azoïque anionique, contenant un groupe amino, et du chlorure de cyanuryle, sans l'isoler, avec l'ammoniac ou avec une amine organique.

11. Procédé selon les revendications 1 à 10, caractérisé en ce que l'on prépare un colorant azoïque anionique, contenant un groupe amino, par diazotation et copulation, et que l'on fait réagir le mélange réactionnel obtenu, sans isoler le colorant azoïque, à une température comprise entre 20 et 80 °C et à un pH compris entre 3,0 et 7,0, pendant 1 à 30 minutes, avec une introduction rapide et une agitation vigoureuse des produits de départ, avec le chlorure de cyanuryle, et qu'ensuite, on fait réagir le produit de condensation obtenu, sans l'isoler, avec l'ammoniac ou une amine organique, toutes les étapes réactionnelles étant effectuées dans des conditions adiabatiques.

12. Procédé selon la revendication 11, caractérisé en ce que l'on réunit les quatre étapes réactionnelles, la diazotation, la copulation, la condensation du colorant azoïque obtenu avec le chlorure de cyanuryle, et la réaction du produit de condensation avec l'ammoniac ou l'amine, constituant un procédé discontinu d'environ 15 minutes par étape, en un procédé quasi-continu, dans un dispositif automatisé.

13. Procédé selon la revendication 11, caractérisé en ce que l'on effectue une ou deux des étapes réactionnelles, la condensation du colorant azoïque contenant un groupe amino avec le chlorure de cyanuryle, la réaction du produit de condensation avec l'ammoniac ou une amine, complètement en continu, dans un réacteur à circulation.